# FASCICULE DE BREVET EUROPEEN

(11) **EP 2 114 559 B1**
(45) Date de publication et mention de la délivrance du brevet: **24.07.2013**
(21) Numéro de dépôt: 07871973.9
(22) Date de dépôt: 19.12.2007
(51) Int. Cl.: B01J 8/06, B01J 19/00

(54) **PROCEDE DE REMPLACEMENT DES TUBES D'UNE UNITE DE REFORMAGE**
VERFAHREN ZUM AUSTAUSCH VON RÖHREN IN EINER VERFORMUNGSEINHEIT
METHOD FOR REPLACING TUBES IN A REFORMING UNIT

(30) Priorité: 21.12.2006 FR 0655815
(43) Date de publication de la demande: 11.11.2009
(73) Titulaire: L'AIR LIQUIDE, Société Anonyme pour l'Etude et l'Exploitation des Procédés Georges Claude, 75007 Paris (FR)
(72) Inventeur: FURTADO, Jader, F-78100 Saint Germain en Laye (FR); WASTIAUX, Sophie, F-93600 Aulnay sous Bois (FR)
(74) Mandataire: Mellul-Bendelac, Sylvie Lisette
(86) Numéro de dépôt international: PCT/FR2007/052560
(87) Numéro de publication internationale: WO 2008/084172

(56) Documents cités:
- FR-A- 2 888 920
- GB-A- 1 149 163
- US-A- 3 607 130
- US-A- 4 161 510
- US-A1- 2005 277 797

## Description

La présente invention concerne un procédé de remplacement des tubes d'un four dans une unité de reformage à la vapeur d'hydrocarbures.
Un procédé de reformage d'hydrocarbures ou d'autres sources de carbone et d'hydrogène, par exemple le bio-méthanol, met en oeuvre une chambre de combustion comprenant des brûleurs et des tubes remplis de catalyseurs et aptes à être traversés par un mélange d'hydrocarbures et de vapeur. Les brûleurs sont disposés de manière à transférer la chaleur de leur combustion au mélange d'hydrocarbures et de vapeur à travers la paroi des tubes, généralement par radiation de la chaleur de la flamme sur les parois réfractaires de la chambre de combustion. Un tel procédé met en oeuvre des températures très élevées, généralement de l'ordre de 950 à 1050°C, proches des limites de résistance des alliages métalliques des tubes. C'est la raison pour laquelle on utilise des tubes pouvant être utilisés à hautes températures, généralement des tubes d'acier comprenant de l'ordre de 25 % en poids de Cr et 35 % en poids de Ni, avec éventuellement ajout d'éléments tels que Nb, Ti, W, Co, Zr. Pourtant, même ces tubes en alliages particuliers s'abîment avec le temps et risquent de se rompre. La rupture d'un tube est très pénalisante pour l'exploitation du procédé de reformage car elle entraîne l'arrêt prématuré du procédé pour changer le tube. Les tubes sont en général conçus pour avoir une durée de vie en fonctionnement de l'ordre de 100 000 heures, à une température de fonctionnement donnée dite "température de design" (l'homme du métier exprime couramment cette durée de vie en années, durée arrondie à 10 ans) ; cependant, fonctionner à une température supérieure de 20 °C à la température de design divise par 2 la durée de vie des tubes, les phases de démarrage, les changements de compositions de mélanges réactionnels influent aussi, souvent de manière négative sur la durée de vie des tubes. Il est donc essentiel de pouvoir anticiper le moment où un tube risque de rompre de manière à pouvoir programmer son changement lors d'une phase de maintenance du four et non au cours de son exploitation.

Le document US 3,507,130 considéré comme l'état de la technique le plus proche décrit une unité de reformage d'hydrocarbures comprenant une chambre de combustion munie de brûleurs et de tubes remplis de catalyseur, lesdits tubes étant remplacés quand ils sont jugés en mauvais état.
Le document US 2005/277797A1 décrit un procédé de production d'hydrocarbures par cracking thermique, utilisant des tubes, la mesure du degré de carburisation conduit à la détermination de la durée de vie d'un tube.

Le document GB 1,149163 décrit une méthode de protection de tubes de reformage par utilisation de revêtement protecteur ; l'état des tubes après chauffage est mesuré et discuté.

Le but de la présente invention est de proposer un procédé de remplacement des tubes d'un four de reformage permettant d'éviter la rupture inattendue de ces tubes au cours de l'exploitation du four.

Dans ce but, l'invention concerne un procédé de remplacement de tubes dans une unité de reformage d'hydrocarbures ou d'autres sources de carbone et d'hydrogène, mettant en oeuvre une chambre de combustion comprenant des brûleurs et lesdits tubes, lesdits tubes étant remplis de catalyseur et étant aptes à être traversés par un mélange d'hydrocarbures et de vapeur, la durée d'utilisation de chacun desdits, tubes étant déterminée à partir de la première utilisation suivant son incorporation dans ladite chambre de combustion, les brûleurs étant disposés de manière à transférer la chaleur de leur combustion au mélange d'hydrocarbures et vapeur à travers la paroi des tubes, dans lequel on réalise :
- des mesures de l'expansion de diamètre extérieur des tubes ΔD avec ΔD = (Dₜ - D₀)/D₀X100, D₀ étant le diamètre du tube neuf et Dt étant le diamètre du tube au moment de la mesure,
- des clichés aux rayons X des tubes,
- des répliques de la surface extérieure des tubes réalisées sur la partie du tube qui est soumise aux températures les plus élevées durant la production,
et dans lequel on remplace un tube dès qu'il vérifie au moins une des conditions suivantes :
- son expansion de diamètre ΔD est supérieure à 3 %,
- son cliché aux rayons X présente au moins une fissure,
- sa réplique indique :
   - un vieillissement thermique tel qu'on observe l'absence de précipités secondaires entre les précipités primaires, et/ou
   - un endommagement par fluage ("creep damage") tel qu'on observe la présence de chaînes de cavités et/ou des frontières de grains.

Le procédé selon l'invention permet de déterminer si un tube doit être remplacé sur la base d'au moins trois types de mesure. Ces mesures sont réalisées avant chaque lancement d'une nouvelle campagne de production. En général, une campagne de production dure au moins 2 ans. Son arrêt est généralement programmé à l'avance pour l'entretien de l'unité opérationnelle. Les tubes utilisés sont généralement faits d'un alliage de type HP.

Selon une variante du procédé, celui-ci est caractérisé en ce que tout tube dont la durée d'utilisation est au moins égale à cinq ans est remplacé.

La durée d'utilsation d'un tube est calculée à partir du moment où le tube est inclus dans la chambre de combustion. Les procédés de reformage fonctionnant en continu à l'exception d'arrêts techniques, le temps de fonctionnement (ou durée d'utilisation) d'un tube correspond à la somme de la durée des campagnes depuis son installation dans la chambre de combustion; le temps consacré aux arrêts techniques, qu'ils soient programmés entre deux campagnes de production ou intempestifs, dus à un dysfonctionnement, est de l'ordre de quelques jours par an, on peut estimer ces temps d'arrêt à moins de 5 % du temps de fonctionnement global, aussi ils seront en général négligés pour estimer ladite durée d'utilisation d'un tube. Un changement anticipé des tubes, par rapport à la durée de vie pour la quelle ils sont conçus (typiquement 100 000 heures) est une mesure de sécurité destinée à prendre en compte un risque de vieillissement prématuré lié à des surchauffes de tubes. Des modes de contrôles complémentaires du déroulement du procédé de reformage pourraient alternativement permettre une meilleure connaissance du vieillissement des tubes et dans certains cas une durée d'utilisation plus longue de ceux-ci.

Le premier type de mesure concerne l'expansion du diamètre des tubes. En effet, sous l'effet de la chaleur, les tubes se dilatent. L'expansion du diamètre ΔD est déduite de la mesure du diamètre Dₜ sur toute la longueur de chaque tube : la valeur de Dₜ correspond au diamètre le plus grand enregistré sur cette longueur au moment de la mesure. Cette mesure est réalisée sur tous les tubes de la chambre de combustion avant chaque lancement d'une nouvelle campagne de production. De préférence, si au cours des mesures de chaque tube, des tubes présentent une expansion de diamètre ΔD comprise entre 2 et 3 %, alors au moins un desdits tubes est démonté pour une analyse destructive. Par analyse destructive, on entend une analyse nécessitant la destruction du tube ; il s'agit par exemple de la coupe de morceaux de tube pour faire une analyse micrographique ou pour usiner des échantillons en vue de réaliser des tests de fluage et de traction.

Le deuxième type de mesure mis en oeuvre dans le procédé de l'invention est le cliché aux rayons X des tubes. Pour les tubes de reformeur à combustion latérale ("side-fired" en anglais), ce cliché aux rayons X est réalisé au niveau de sa soudure la plus inférieure localisée dans la partie la plus chaude du reformeur. Ce type de mesure est réalisé avant le lancement d'une nouvelle campagne de production sur uniquement 5 % de tous les tubes de la chambre de combustion. Ces 5 % de tubes sont sélectionnés parmi les tubes soumis, lors de la campagne de production précédente, aux températures les plus chaudes ; la sélection se fait sur la base des enregistrements de températures des tubes réalisés au cours de la campagne de production précédente. Puis, à la fin de la nouvelle campagne de production, d'autres tubes seront contrôlés représentant également 5 % de tous les tubes en suivant le même critère. De préférence, si un tube doit être remplacé suite à son cliché aux rayons X₁ on réalise de nouveau un cliché aux rayons X de 5 autres pourcents des tubes avant de démarrer une nouvelle campagne de production.

Le troisième type de mesure mis en oeuvre dans le procédé de l'invention est la réalisation de réplique des tubes. La mesure par réplique consiste à prendre une empreinte de la surface métallique du tube et à en faire un examen métallurgique. En effet, il a été observé que l'état métallurgique de la surface était un reflet de l'état métallurgique de l'intérieur du tube. Pour les tubes de reformeur à combustion latérale ("side-fired"), la mesure par réplique est réalisée sur la partie du tube qui est soumise aux températures les plus élevées pendant la production ; cette partie correspond généralement au troisième tiers inférieur. Avant de faire l'empreinte, la surface de la paroi externe du tube est préparée par polissage, selon une technique connue pour l'étude de la métallographie des aciers. Le polissage est réalisé jusqu'à ce que la surface polie présente l'aspect d'un miroir. La surface polie est ensuite attaquée chimiquement avec un réactif approprié, comme par exemple le réactif de marble de composition chimique suivante : 4 g de sulfate de cuivre, 20 ml d'acide chlorhydrique concentré et 20 ml de l'eau déminéralisé. Apres la préparation de la surface du tube, la réplique, constituée par exemple d'un film d'acétate, est collée sur la surface pour enregistrer la microstructure de tube. On analyse ensuite la réplique séparément du point de vue du vieillissement thermique et du point de vue de l'endommagement par fluage ("creep damage").

L'analyse de l'endommagement par fluage consiste à classifier la surface selon l'une des classes suivantes par simple observation au microscope :
- classe 0 : matériel neuf n'ayant jamais été exposé à la chaleur
- classe 1 : matériel sous fluage ne présentant aucune cavité,
- classe 2a : matériel sous fluage avancé présentant des cavités isolées,
- classe 2b : matériel sous fluage avancé présentant de nombreuses cavités sans orientation préférée,
- classe 3a : matériel endommagé par fluage présentant de nombreuses cavités orientées,
- classe 3b : matériel très endommagé par fluage présentant des chaînes de cavités et/ou des frontières de grains,
- classe 4 : endommagement par fluage avancé présentant des micro fissures,
- classe 5 : endommagement par fluage très avancé présentant des macro fissures.

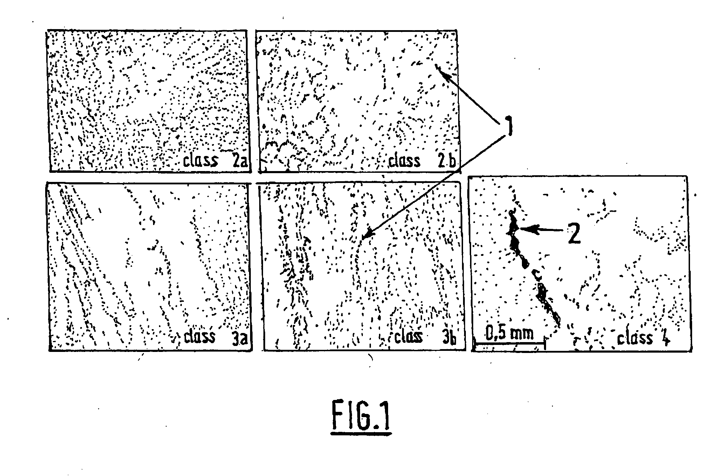

Ce type de classification correspond au standard VGB-TW 507 décrite dans VGB-TW 507 : "Richtreihen zur Bewertung der Gefuegeausbildung und -schaedigung zeitstandbeanspruchter Werkstoffe von Hochdruckrohrleitungen und Kesselbauteilen. VGB Kraftwerkstechnik GmbH, Essen, 1992." La figure 1 illustre les différentes classes 2a à 4 d'endommagement par fluage : les points noirs 1 représentent les cavités et on observe une microfissure 2 sur la classe 4.

Selon l'invention, si un endommagement par fluage de classe 3b ou supérieure est analysé, le tube doit être remplacé.

L'analyse du vieillissement thermique consiste à classifier la surface selon l'une des classes suivantes par simple observation au microscope :
- classe 0 : matériel neuf n'ayant jamais été exposé à la chaleur et n'ayant subi aucun vieillissement thermique ; les précipités eutectiques primaires sont bien taillés, nets et délinéés autour des cellules de solidification et la matrice austénitique est libre des précipités secondaires,
- classe 1 : présence de très fins précipités secondaires entre les précipités primaires,
- classe 2 : présence de fins précipités secondaires entre les précipités primaires,
- classe 3 : faible présence de précipités secondaires grossiers entre les précipités primaires et signes de coalescence des précipités primaires,
- classe 4 : absence de précipités secondaires entre les précipités primaires et présence de précipités primaires épais et tendant à s'agglomérer;
- classe 5 : absence de précipités secondaires entre les précipités primaires et présence de grossiers précipités primaires agglomérés.

Les précipités eutectiques primaires sont de taille supérieure aux précipités secondaires. Les précipités primaires sont issus de la fonte et de la solidification de l'alliage des tubes. Les précipités secondaires sont plus fins que les primaires, un alliage neuf n'en présente pas : ils n'apparaissent que lors de l'exposition de l'alliage à la chaleur. Mais, si le vieillissement thermique est important, les précipités secondaires disparaissent.

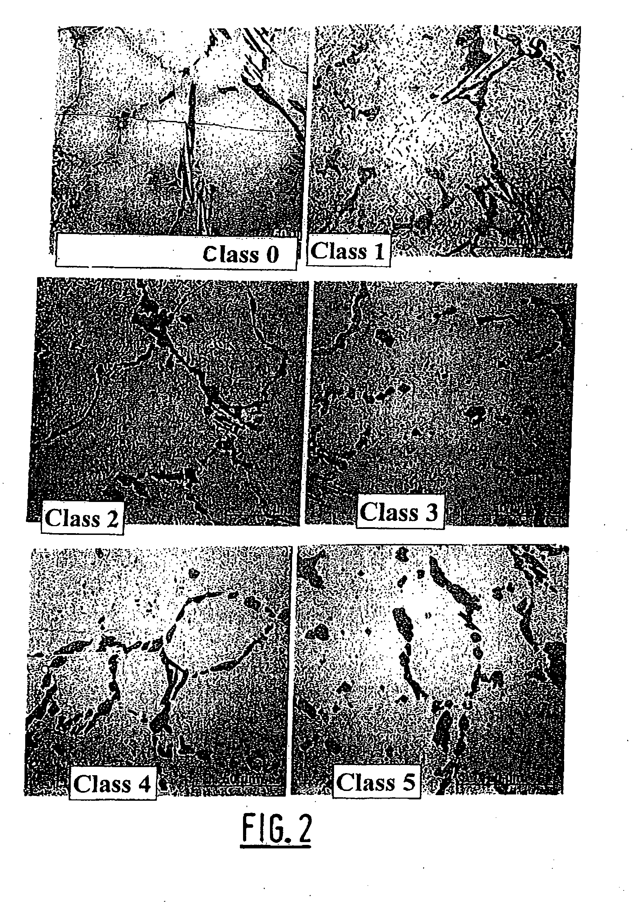

La figure 2 illustre les différentes classes 0 à 5 de vieillissement thermique. Selon l'invention, si un vieillissement thermique de classe 4 ou supérieure est analysé, le tube doit être remplacé.

Les tubes remplacés subissent ensuite une analyse destructive de manière à contrôler les dommages qu'ils ont subis et affiner la méthode générale de contrôle des tubes pour la prise de décision de leur remplacement.

## Revendications

1. Procédé de remplacement de tubes dans une unité de reformage d'hydrocarbures ou d'autres sources de carbone et d'hydrogène mettant en oeuvre une chambre de combustion comprenant des brûleurs et lesdits tubes, lesdits tubes étant remplis de catalyseur et étant aptes à être traversés par un mélange d'hydrocarbures et de vapeur, la durée d'utilisation de chacun desdits tubes étant déterminée à partir de la première utilisation suivant son Incorporation dans ladite chambre de combustion, les brûleurs étant disposés de manière à transférer la chaleur de leur combustion au mélange d'hydrocarbures et vapeur à travers la parol des tubes, **caractérisé en ce qu'**on réalise avant chaque lancement d'une nouvelle campagne de production :
- des mesures de l'expansion de diamètre extérieur des tubes ΔD, avec ΔD = (Dₜ - D₀)/D₀X100, D₀ étant le diamètre du tube neuf et Dt étant le diamètre au tube au moment de la mesure,
- des clichés aux rayons X des tubes,
- des répliques de la surface des tubes réalisées sur la partie du tube qui est soumise aux températures les plus élevées durant la production et
**en ce qu'**on remplace un tube dès qu'il vérifie au moins une des conditions suivantes :
- son expansion de diamètre ΔD est supérieure à 3 %,
- son cliché aux rayons X présente au moins une fissure,
- sa réplique indique :
un vieillissement thermique tel qu'on observe l'absence de précipités secondaires entre les précipités primaires,
et/ou un endommagement par fluage tel qu'on observe la présence de chaînes de cavités et/ou des frontières de grains.

2. Procédé selon la revendication 1, **caractérisé en ce que** tout tube dont la durée d'utilisation est au moins égale à cinq ans est remplacé.

3. Procédé selon la revendication 1 ou 2, **caractérisé en ce qu'**on mesure l'expansion de diamètre ΔD de chaque tube de la chambre de combustion.

4. Procédé selon la revendication 1 ou 3, **caractérisé en ce qu'**on mesure l'expansion de diamètre ΔD sur toute la longueur de chaque tube.

5. Procédé selon l'une des revendications précédentes, **caractérisé en ce que**, si des tubes présentent une expansion de diamètre ΔD comprise entre 2 et 3 %, au moins un desdits tubes est démonté pour une analyse destructive.

6. Procédé selon l'une des revendications précédentes, **caractérisé en ce que**, pour les tubes de reformeur à combustion latérale, on réalise un cliché aux rayons X du tube au niveau de sa soudure la plus inférieure localisée dans la partie la plus chaude du reformeur

7. Procédé selon l'une des revendications précédentes, **caractérisé en ce qu'**on réalise un cliché aux rayons X de 5 % de tous les tubes.

8. Procédé selon l'une des revendications précédentes, **caractérisé en ce que**, si un tube est remplacé suite à son cliché aux rayons X, on réalise de nouveau un cliché aux rayons X de 5 autres pourcents des tubes avant de démarrer une nouvelle campagne de production.

9. Procédé selon l'une des revendications précédentes, **caractérisé en ce qu'**on réalise une réplique de 5 % de tous les tubes.

10. Procédé selon l'une des revendications précédentes, **caractérisé en ce que**, si un tube est remplacé suite à sa réplique, on réalise de nouveau une réplique de 5 autres pourcents des tubes avant de démarrer une nouvelle campagne de production.

## Patentansprüche

1. Verfahren zum Austauschen von Röhren in einer Kohlenstoffwasserstoff-Reformierungseinheit oder anderen Quellen für Kohlenstoff und Wasserstoff, die eine Verbrennungskammer verwenden, die Brenner und die Röhren enthält, wobei die Röhren mit einem Katalysator gefüllt sind und durch die ein Gemisch aus Kohlenstoffwasserstoffen und Dampf strömen kann, wobei die Nutzungsdauer jeder der Röhren seit der ersten Nutzung nach ihrem Einbau in die Verbrennungskammer bestimmt wird, wobei die Brenner in der Weise angeordnet sind, dass die Wärme ihrer Verbrennung an das Gemisch aus Kohlenstoffwasserstoffen und Dampf über die Wand der Röhren übertragen wird, **dadurch gekennzeichnet, dass** vor jedem Beginn eines neuen Produktionsbetriebs ausgeführt werden:
- Messungen der Ausdehnung ΔD des Außendurchmessers der Röhren, wobei ΔD = (Dₜ - D₀)/D₀ × 100, wobei D₀ der Durchmesser der neuen Röhre ist und Dₜ der Durchmesser der Röhre zum Zeitpunkt der Messung ist,
- Röntgenstrahlaufnahmen der Röhren,
- Abdrücke der Oberfläche der Röhren, die in dem Teil der Röhre ausgeführt werden, der während der Produktion den höchsten Temperaturen unterworfen ist, und
dass eine Röhre ausgetauscht wird, sobald wenigstens eine der folgenden Bedingungen verifiziert wird:
- ihre Durchmesserausdehnung ΔD ist größer als 3 %,
- ihre Röntgenstrahlaufnahme weist wenigstens einen Riss auf,
- ihr Abdruck gibt an:
- eine thermische Alterung, indem etwa das Fehlen sekundärer Niederschläge zwischen den primären Niederschlägen beobachtet wird,
- und/oder eine Kriechbeschädigung, indem etwa das Vorhandensein von Hohlraumketten und/oder Korngrenzen beobachtet wird.

2. Verfahren nach Anspruch 1, **dadurch gekennzeichnet, dass** jede Röhre, deren Nutzungsdauer wenigstens gleich fünf Jahre ist, ausgetauscht wird.

3. Verfahren nach Anspruch 1 oder 2, **dadurch gekennzeichnet, dass** die Durchmesserausdehnung ΔD jeder Röhre der Verbrennungskammer gemessen wird.

4. Verfahren nach Anspruch 1 oder 3, **dadurch gekennzeichnet, dass** die Durchmesserausdehnung ΔD auf der gesamten Länge jeder Röhre gemessen wird.

5. Verfahren nach einem der vorhergehenden Ansprüche, **dadurch gekennzeichnet, dass** dann, wenn die Röhren eine Durchmesserausdehnung ΔD im Bereich von 2 bis 3 % zeigen, wenigstens eine der Röhren für eine destruktive Analyse demontiert wird.

6. Verfahren nach einem der vorhergehenden Ansprüche, **dadurch gekennzeichnet, dass** für Reformierungsröhren mit seitlicher Verbrennung eine Röntgenstrahlaufnahme der Röhre auf Höhe ihrer untersten Verschweißung, die sich in dem heißesten Teil des Reformierers befindet, ausgeführt wird.

7. Verfahren nach einem der vorhergehenden Ansprüche, **dadurch gekennzeichnet, dass** eine Röntgenstrahlaufnahme an 5 % aller Röhren ausgeführt wird.

8. Verfahren nach einem der vorhergehenden Ansprüche, **dadurch gekennzeichnet, dass** dann, wenn eine Röhre als Folge ihrer Röntgenstrahlaufnahme ausgetauscht wird, eine neue Röntgenstrahlaufnahme an weiteren 5 % der Röhren ausgeführt wird, bevor ein neuer Produktionsbetrieb begonnen wird.

9. Verfahren nach einem der vorhergehenden Ansprüche, **dadurch gekennzeichnet, dass** ein Abdruck am 5 % aller Röhren ausgeführt wird.

10. Verfahren nach einem der vorhergehenden Ansprüche, **dadurch gekennzeichnet, dass** dann, wenn eine Röhre als Folge ihres Abdrucks ausgetauscht wird, erneut ein Abdruck an weiteren 5 % der Röhren vorgenommen wird, bevor ein neuer Produktionsbetrieb begonnen wird.

## Claims

1. Method for replacing tubes in a unit for reforming hydrocarbons or other sources of carbon and hydrogen using a combustion chamber comprising burners and said tubes, said tubes being filled with catalyst and being capable of being passed through by a mixture of hydrocarbons and steam, the working life of each of said tubes being determined from the first use following its incorporation into said combustion chamber, the burners being arranged so as to transfer the heat from their combustion to the mixture of hydrocarbons and steam through the wall of the tubes, **characterized in that** with each launch of a new production run the following are carried out:
- measurements of the expansion of the external diameter of the tubes ΔD, with ΔD = (Dₜ - D₀)/D₀ × 100, D₀ being the diameter of the virgin tube and Dₜ being the diameter of the tube at the time of the measurement;
- X-ray photographs of the tubes;
- replicas of the surface of the tubes made on the part of the tube which is subjected to the highest temperatures during production; and
**in that** a tube is replaced as soon as it meets at least one of the following conditions:
- its expansion in diameter ΔD is greater than 3%;
- its X-ray photograph exhibits at least one crack;
- its replica indicates:
. thermal aging such that the absence of secondary precipitates between the primary precipitates is observed;
. and/or creep damage such that the presence of strings of cavities and/or of grain boundaries is observed.

2. Method according to Claim 1, **characterized in that** any tube for which the working life is at least equal to five years is replaced.

3. Method according to Claim 1 or 2, **characterized in that** the expansion in diameter ΔD of each tube of the combustion chamber is measured.

4. Method according to Claim 1 or 3, **characterized in that** the expansion in diameter ΔD is measured over the entire length of each tube.

5. Method according to one of the preceding claims, **characterized in that**, if tubes have an expansion in diameter of ΔD between 2 and 3%, at least one of said tubes is dismantled for a destructive analysis.

6. Method according to one of the preceding claims, **characterized in that**, for the tubes of a side-fired reformer, an X-ray photograph of the tube is taken level with its lowest weld located in the hottest part of the reformer.

7. Method according to one of the preceding claims, **characterized in that** an X-ray photograph is taken for 5% of all the tubes.

8. Method according to one of the preceding claims, **characterized in that**, if a tube is replaced following its X-ray photograph, an X-ray photograph is again taken of a different 5% of the tubes before starting a new production run.

9. Method according to one of the preceding claims, **characterized in that** a replica is made of 5% of all the tubes.

10. Method according to one of the preceding claims, **characterized in that**, if a tube is replaced following its replica, a replica of a different 5% of the tubes is again made before starting a new production run.
